# EUROPEAN PATENT APPLICATION

(11) **EP 3 644 040 A1**
(43) Date of publication of application: **29.04.2020**
(21) Application number: 18821329.2
(22) Date of filing: 21.06.2018
(51) Int. Cl.: G01N 3/00, G01N 3/02, G01N 3/08, G01N 3/10, G01N 3/12, G01N 3/16

(54) **MACHINE FOR TESTING MECHANICAL PROPERTIES**

(30) Priority: 23.06.2017 CO 17006274
(71) Applicant: Fundacion Universidad Del Norte, Atlántico (CO)
(72) Inventor: CANTILLO MAZA, Victor Manuel, Barranquillam, Atlantico (CO); GUZMAN GUERRERO, Andres Fernando, Barranquilla, Atlantico (CO)
(74) Representative: ABG Intellectual Property Law, S.L.
(86) International application number: PCT/IB2018/054586
(87) International publication number: WO 2018/235033

(57) **Abstract**

The present invention corresponds to a machine for testing mechanical properties of hollow cylinders. The machine comprises an open container in which the hollow cylinder is arranged. Inside the hollow cylinder there is an expanding cylindrical membrane, which is connected to a pressure unit that supplies a pressurized fluid to the expanding membrane. A valve and a pressure sensor are located between the pressure unit and the expanding cylindrical membrane. A control and data capture system is connected to the pressure unit, the valve and the pressure sensor. The machine performs tensile and compression tests on hollow cylinders.

## Description

### Field of the invention

The present invention is related to machines for performing mechanical property tests on test tubes. In particular, the invention relates to machines for testing mechanical properties in hollow cylindrical test tubes.

### Prior art description

Knowing the mechanical properties of materials is relevant for the structural design of elements, since with such information it is possible to carry out the sizing of elements, foreseeing life cycles, among other aspects.

Testing machines allow mechanical properties to be tested on test tubes by exerting forces in the longitudinal or perpendicular direction of the test tube. Due to the configuration of the load application systems through pistons or jaws, these machines are not useful in applying direct loads, for the evaluation of compression or tensile loads in hollow cylinders, of those known in prior art such as thick wall cylinders, and commonly manufactured in concrete or ceramic.

US 6,595,068 B2 discloses a hollow cylinder testing machine for tensile strength testing. The machine comprises a frame that holds the sample around an inflatable membrane. The membrane is inflated by a pressurized fluid. The fluid is monitored to determine the pressure at critical points during the test. The machine comprises a pressure transducer to monitor the fluid pressure, which correlates to the amount of force exerted on the sample. The pressure transducer is located inside the flexible membrane. The pressurized fluid is supplied by a compressor that can provide hydraulic or pneumatic power. In an illustrated embodiment, the machine comprises plates arranged to seal the membrane inside the hollow cylinder. The plates are configured to support the hollow cylinder, but not to exert any force on it. The plates also prevent the inflatable membrane from expanding longitudinally. A computer can be connected to the pressure transducer to obtain the pressure values. As the invention is directed to asphalts, the machine comprises a fluid mechanism to simulate different asphalt exposure temperatures.

The disclosed machine allows for hollow cylinder tensile tests. However, during the test there is the presence of external and opposing forces. External and opposing forces, such as contact friction of the hollow cylinder on the surface where it is located, exert resistance to the deformation of the hollow cylinder, which affects the test results.

In accordance with the above, it is necessary to develop a machine that allows tensile and compression tests to be performed on a hollow cylinder, in such a way that the hollow cylinder can be deformed without mechanical resistance in its expansion or deformation due to forces external to the hollow cylinder.

### Brief description of the invention

The present invention corresponds to a machine for testing mechanical properties of a hollow cylinder (hereinafter machine), which comprises:
- an open container in which the hollow cylinder is arranged;
- an expandable cylindrical membrane arranged inside the hollow cylinder;
- a pressure unit connected to the expanding membrane (hereafter, expanding membrane), the pressure unit supplies a pressurized fluid to the expanding membrane;
- a valve arranged between the pressure unit and the expanding membrane;
- a pressure sensor arranged between the pressure unit and the expanding membrane; and
- a control and data collection system connected to the pressure unit, the valve and the pressure sensor.

A lubricant is arranged in the open container, in such a way that the friction force between the hollow cylinder and the open container is reduced, thus reducing the external forces that oppose the deformation of the hollow cylinder. In other words, the hollow cylinder is allowed to deform under the force exerted by the expanding cylindrical membrane, without any resistance due to friction from the contact of the hollow cylinder with the open container.

In one embodiment, the open container with lubricant forms a sample holder for carrying out tensile tests on hollow cylinders. In the embodiment comprising the cylindrical wall and the open container with lubricant, a sample holder is configured for compression tests on hollow cylinders. The sample holder consists of at least two plates, a cup and at least four support elements attached to the plates. The plates are arranged at the ends of the hollow cylinder to prevent expansion of the inflatable membrane in its longitudinal direction. The bottom plate is underneath the open container, and the cup is connected to the inflatable membrane towards the end that is outside the hollow cylinder.

### Description of the figures

FIG. 1 corresponds to a machine embodiment which comprises a frame.
FIG. 2 corresponds to a view of the hollow cylinder with the expanding cylinder membrane arranged inside the hollow cylinder.
FIG. 3 shows the hose connecting the pressure unit to the expanding cylindrical membrane.
FIG. 4 corresponds to an embodiment of the sample holder comprising two plates, a lower and an upper one; the upper plate has a hole in its upper part where the hose enters and the cup is connected at the other end; the cup is connected to the inflatable membrane, the lower plate is connected on one of its surfaces to the open container.
FIG. 5 shows a sample holder consisting of two plates, one lower and one upper, the upper plate has a hole in its upper part where the hose enters and at the other end, the cup is connected and it connects to the supporting elements; the cup is connected to the inflatable membrane, the lower plate is connected on one of its surfaces to the open container and the supporting elements.
FIG. 6 shows a sample holder assembly comprising two plates, a lower and an upper plate, the upper plate has a hole and the lower plate has the open container on one surface, and the supporting elements, connected to the plates.

### Detailed description of the invention

The present invention concerns a machine for testing mechanical properties (hereinafter machine) to a hollow cylinder (1).

Among the mechanical properties that may be evaluated on the testing machine of the present invention are tension and compression mechanical properties.

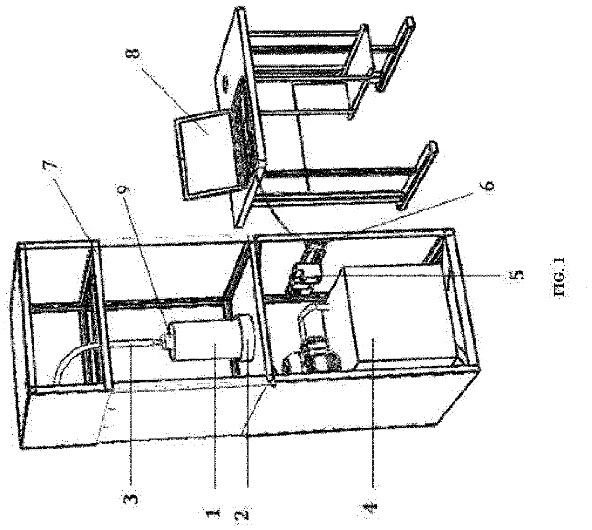

Referring to FIG. 1, a machine embodiment is shown, which includes:
- an open container (2);
- an expanding cylindrical membrane (9);
- a pressure unit (4);
- a valve (5); and
- a control and data capture system (8).

The hollow cylinder (1) has a hole that runs through the hollow cylinder (1) along its entire length. The borehole has a diameter with the same cross-section as the cylindrical-expanding membrane (9) when the cylindrical-expanding membrane (9) is without any degree of expansion (hereafter referred to as the resting state).

Referring to FIG. 1, the hollow cylinder (1) is arranged on the open container (2), so one of the flat surfaces of the hollow cylinder (1) is arranged on the open container (2). Inside the hollow cylinder (1), the expanding cylindrical membrane (9) is arranged, the expanding cylindrical membrane (9) is inserted at the opposite end which is in contact with the open container (2).

A lubricant (not illustrated) is available in the open container (2). The lubricant creates a sliding layer between the hollow cylinder (1) and the open container (2), and the expanding cylinder membrane (9) and the open container (2). Consequently, the friction coefficient of the hollow cylinder (1) and the open container (2), and the expanding cylindrical membrane (9) and the open container (2) is reduced. The decrease in the friction coefficient is important during machine operation which is explained below. This machine embodiment is suitable for carrying out tensile tests on a hollow cylinder (1).

The expandable cylindrical membrane (9) must be lubricated to facilitate its entry into the hollow cylinder (1) and also to avoid frictional interference during the test.

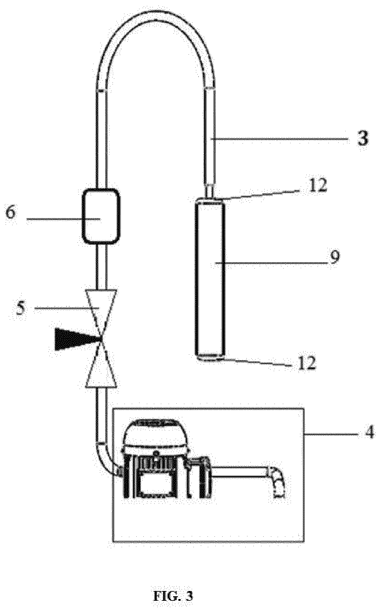

Referring to FIG. 3, the expanding cylindrical membrane (9) can have two plates (12) arranged at its ends, one plate (12) for each end of the expanding cylindrical membrane (9). The function of the plates (12) is to counteract the longitudinal expansion of the expanding cylindrical membrane (9), therefore only radial expansion of the expanding cylindrical membrane (9) is allowed. The plates (12) are metal elements within the membrane which are only available at the ends. The plates (12) are located where it makes contact with the hose (3). The plates (12) are intrinsic and internal elements of the expanding cylindrical membrane (9).

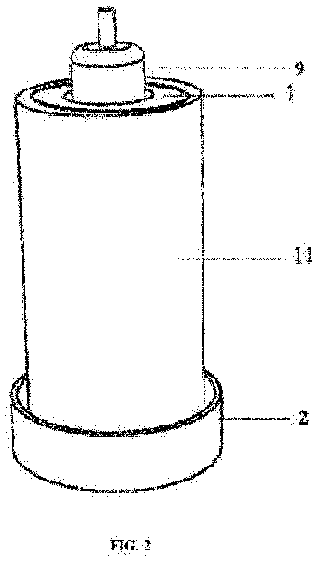

As shown in FIG. 2, during the test a cylindrical wall (11) can be arranged over the open container (2). The cylindrical wall (11) contains the hollow cylinder (1), so there is no space between the hollow cylinder (1) and the cylindrical wall (11). This machine embodiment is suitable for performing compression tests, as the hollow cylinder (1) is contained within the cylindrical wall (11), and the cylindrical wall (11) exerts a force to resist the deformation of the hollow cylinder (1). In other words, the hollow cylinder is subjected to opposing radial forces. The material in which the cylindrical wall (11) is made is of higher mechanical strength than the material of the hollow cylinder (1).

In other words, in one invention embodiment, the open container (2) with lubricant configures a sample holder for carrying out tensile tests on hollow cylinders (1). And in the embodiment comprising the cylindrical wall (11) plus the open container (2) with lubricant, a sample holder is configured for compression tests on hollow cylinders (1).

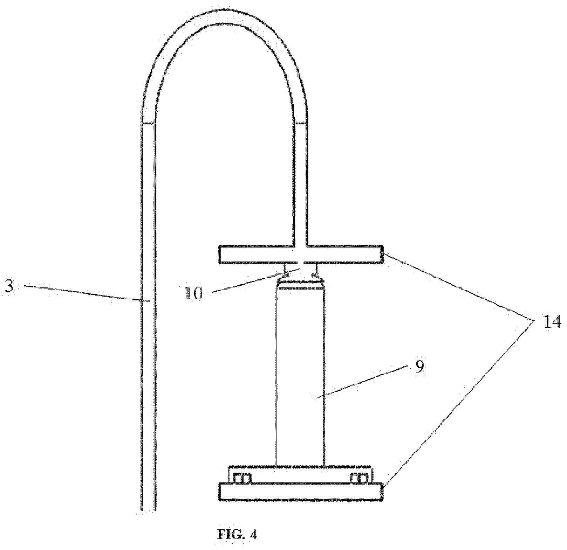

As shown in FIG. 4, 5 and 6, a sample holder comprises at least two sheets (14), a cup (10) and at least four support elements (13) attached to the sheets (14). The sheets (14) are arranged at the ends of the hollow cylinder (1) to prevent the expansion of the expanding cylindrical membrane (9) in its longitudinal direction. The lower sheet (14) is arranged under the open container (2), the cup (10) is connected to the expanding cylinder membrane (9) at the end which is outside the hollow cylinder (1). The sample holder has some support elements (13). Also, the sample holder may or may not have a cylindrical wall (11). The cup (10) has two elements, an ellipsoid-shaped element with a larger diameter coinciding with the diameter of the expandable cylindrical membrane (9) in its upper portion and a cylinder (hereafter referred to as a trunk) connected at its lower end to the ellipsoid and at its upper end to the upper sheet (14) of the sample holder.

The expanding cylindrical membrane (9) is made of synthetic rubber. The synthetic rubber of the expanding cylindrical membrane (9) is selected from the group consisting of styrene butadiene (Buna S), chlorosulfonated polyethylene (Hypalon), polychloroprene (Neoprene) or similar rubbers manufactured by a person skilled in the art.

Referring to FIG. 1 and 3, the pressure unit (4) is connected to the cylindrical expansion container (9) by means of a hose (3). The pressure unit (4) supplies a pressurized fluid to the expanding cylindrical membrane (9), for the purpose of expanding the latter. The valve (5) and the pressure sensor (6) are arranged between the pressure unit (4) and the expanding cylindrical membrane (9), along the hose (3).

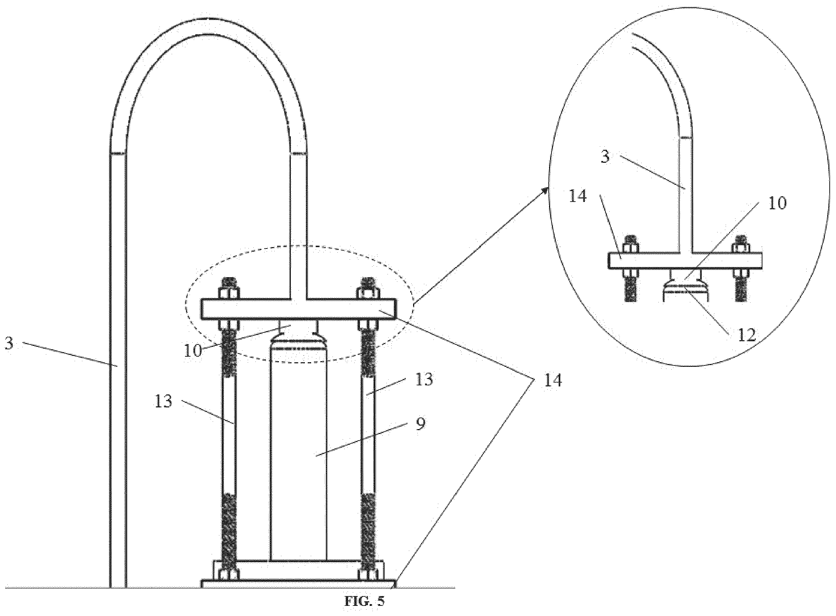

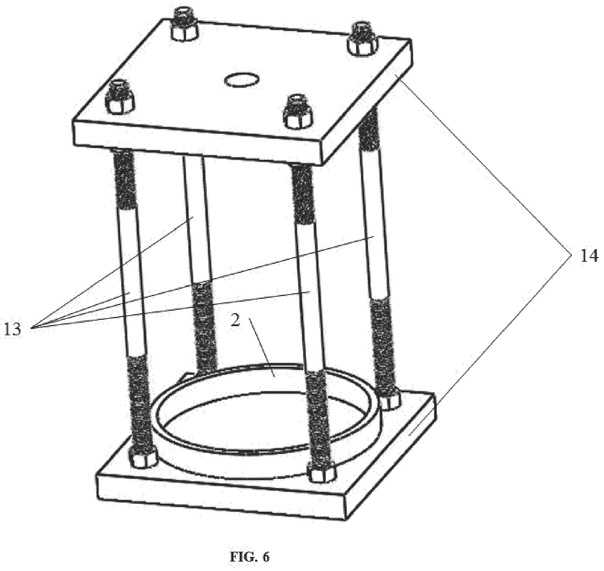

The cup (10) is connected to the end of the expanding cylindrical membrane (9) where the hose (3) enters. For this reason, the ellipsoid-shaped element of the cup (10) has the same curvature as one of the ends of the expanding cylindrical membrane (9) and the trunk is straight to make contact with the upper sheet (14) of the sample holder. As shown in FIG. 5 and 6, the upper sheet (14) has a hole where the hose (3) enters from one side and the cup (10) is connected from the other side. The cup (10) has two ends, one connected to the upper sheet (14) and the other to the expanding cylindrical membrane (9) or to the plate (12) of the expanding cylindrical membrane (9) as mentioned above. The hose (3) passes through the upper sheet (14) and the cup (10) and is connected to the expanding cylindrical membrane (9).

The ellipsoid-shaped element of the cup (10) is in contact with the expanding cylindrical membrane (9) or the plates (12).

The support elements (13) of the sample holder do not come into contact with the hollow cylinder (1). The support elements (13) are selected from the group consisting of: screws, threaded bars at their ends, smooth bars, fully threaded bars, metal angles or similar elements understood by a person with average knowledge of the material.

In one embodiment of the invention (not illustrated), the machine comprises a manifold. The manifold is connected to the outlet of the pressure unit (4). The valve (5) is connected to the manifold, the pressure sensor (6) is connected to the valve (5), and the hose (3) is connected to the pressure sensor (6).

The pressure unit (4) can be either a hydraulic or a pneumatic unit.

The valve (5) is selected from the group consisting of proportional, control, pressure relief or pressure control valves.

Referring to FIG. 1, the control and data capture system (8) is connected to the pressure unit (4) and the valve (5). The control and data capture system (8) controls the pressure of the fluid supplied by the pressure unit (4) to the expanding cylindrical membrane (9). In the same way, the control and data capture system (8) controls the flow rate of the fluid supplied by the pressure unit (4) to the expanding cylindrical membrane (9), by controlling the opening of the valve (5).

A control and data capture system (8) records the pressure and pressure drop data in the flow line from the pressure unit (4) to the cylindrical expansion container (9), from the pressure sensor (6). By means of the pressure and pressure drop data, the control system can determine the mechanical properties of the hollow cylinder (1).

The force to perform the test is supplied through the expanding cylindrical membrane (9) on the inner face of the hollow cylinder (1). This generates radial forces in conjunction with tangential forces, leading to tensile failure in the hollow cylinder (1). When the cylindrical wall (11) is laid out, the failure is due to compression, since the cylindrical wall (11) exercises resistance to the deformation of the hollow cylinder (1), i.e. a force contrary to that exercised by the expanding cylindrical membrane (9).

In one embodiment of the invention, as shown in FIG. 1, the machine comprises a frame (7) on which the other parts of the machine are arranged.

### Example 1

In one configuration of the machine elements, the expanding cylindrical membrane (9) made of neoprene enters the hollow cylinder (1) which is made of a brittle material (simple concrete) composed of cement, coarse aggregate (gravel), fine aggregate (sand) and water. The expanding cylindrical membrane (9) has a plate (12) that will improve the contact between the cup (10) and the membrane in conjunction with the hose.

The hollow cylinder (1) is arranged on the open container (2) and a sample holder consisting of two sheets (14), one upper and one lower, a cup (10) and four threaded rod type support elements (13). The upper sheet (14) has a hole through which the hose (3) enters on one side and the cup (10) on the other. The cup (10) is in contact with one of the plates (12) of the expanding cylindrical membrane (9). The sheets (14) and support elements (13) restrict the longitudinal deformation of the membrane.

The hose (3) is connected to a pressure sensor (6) XMLP100BC22 (maximum pressure 10 MPa), the pressure sensor (6) is connected to a valve (5), the valve (5) is connected to a manifold, a manifold is connected to the outlet of a pressure unit (4).

The valve (5) is a pressure relief valve. It should be noted its sizing was based on the valve design flow (5) (Model 07C 1.4 gal/min).

The hollow cylinder (1) has an external radius of 75 mm and an internal radius of 32 mm and a height of 300 mm.

The support elements (13) are welded to the lower sheet (14) in a non-through hole in the sheet (14) and the support elements (13) are threaded to the upper sheet (14).

### Example 2

Two phases of data checking were carried out, a computational one (in FEM - Finite Element Model) and a practical one (in a laboratory).

The data obtained from the experiments and computer modelling were as follows:

| | Tensile strength through laboratory experimentation | Tensile strength in FEM |
|---|---|---|
| Test tube 1 | 3.179 MPa | 3.136 MPa |
| Test tube 2 | 2.282 MPa | 2.250 MPa |
| Test tube 3 | 3.467 MPa | 3.421 MPa |
| Test tube 4 | 3.394 MPa | 3.348 MPa |
| Test tube 5 | 3.971 MPa | 3.917 MPa |
| Test tube 6 | 3.899 MPa | 3.846 MPa |

The average tensile strength by laboratory experimentation is 3.3640 MPa and the tensile strength in FEM is 3.320 MPa.

### Example 3

In one embodiment of the invention the cup (10) has a base diameter less than 31.75 mm, a base diameter greater than 71.12 mm, a height of the semi-spherical trunk of 11.45 mm, a lower edge radius of the semi-spherical trunk of 52.39 mm.

### Example 4

In one embodiment of the invention, the maintenance of the hydraulic or pneumatic system, is carried out without fluid through the hose (3) and the expandable cylindrical membrane (9), after not having fluid in the elements, the expandable cylindrical membrane (9) is disconnected from the hose (3), once separated, the hose (3) can pass through the trunk of the cup (10) and the upper sheet (14).

It should be understood that the present invention is not limited to the embodiments described and illustrated herein, since as will be evident to a normally skilled person in the art, there are possible variations and modifications that do not depart from the spirit and scope, which is only defined by the following claims.

## Claims

1. A mechanical property testing machine for hollow cylinders comprising:
- an open container on which the hollow cylinder is placed;
- an expandable cylindrical membrane arranged inside the hollow cylinder;
- a pressure unit connected to the cylindrical expansion container; the pressure unit supplies a pressurized fluid to the cylindrical expansion container;
- a valve arranged between the pressure unit and the expanding cylindrical membrane;
- a pressure sensor arranged between the pressure unit and the expanding cylindrical membrane and,
- a control and data capture system connected to the pressure unit, the valve and the pressure sensor.

2. The machine of Claim 1, **characterized by** the fact that a lubricant is placed in the open container.

3. The machine of Claim 1, **characterized by** a cylindrical wall above the open container, the cylindrical wall contains the hollow cylinder.

4. The machine of Claim 1, **characterized by** the fact that the pressure unit is either a hydraulic unit or a pneumatic unit.

5. The machine of Claim 1, characterized because the valve is selected from the group formed by proportional relief valves or control valves, pressure relief valve or pressure control valve.

6. The machine in Claim 1, **characterized by** a manifold connected to the pressure unit and the valve.

7. The machine in Claim 6, **characterized by** the pressure sensor being connected to the manifold.

8. The machine of Claim 1, **characterized by** the hollow cylinder arranged in a sample holder made up of:
- at least two sheets, each of which are arranged at the ends of the hollow cylinder;
- a cup, the cup is connected to the expanding cylindrical membrane, the cup is arranged on one of the sheets; and,
- at least four support elements attached to the plates

9. The machine of Claim 8, comprising a cylindrical wall, the cylindrical wall contains the hollow cylinder.
